# EUROPEAN PATENT APPLICATION

(11) **EP 2 228 484 A1**
(43) Date of publication of application: **15.09.2010**
(21) Application number: 10155267.7
(22) Date of filing: 03.03.2010
(51) Int. Cl.: D06F 39/08, D06F 33/02, A47L 15/42, G01F 23/22

(54) **Method for the production of a household appliance comprising at least one pressure switch, household appliance manufactured according to said method and pressure switch for the production thereof**

(30) Priority: 11.03.2009 IT TO20090183
(71) Applicant: Indesit Company S.p.A., 60044 Fabriano (AN) (IT)
(72) Inventor: Mariotti, Costantino, 06028 Sigillo (PG) (IT)
(74) Representative: Dini, Roberto

(57) **Abstract**

Method for the production of a household appliance (10), in particular a washing machine, a dishwasher, a washing/drying machine or a clothes dryer, of the type comprising at least one pressure switch (1) in communication with a control unit (15) of the household appliance (10), comprising at least the steps of:
a) reading measured identification parameters of the transfer function of the pressure switch (1), b) calibrating the control unit (15) as a function of said identification parameters.

The present invention also relates to a household appliance manufactured in accordance with such method and to a pressure switch for the production thereof.

## Description

The present invention relates to a method for the production of a household appliance, in particular a washing machine, a dishwasher, a washing/drying machine or a clothes dryer, of the type comprising at least one pressure switch, as well as to a household appliance manufactured in accordance with such method and to a pressure switch for the production thereof.

In particular, the pressure switch is of the linear type: linear pressure switches are per se known transducer devices essentially consisting of a casing containing a coil inside of which a ferromagnetic core moves, driven by an elastic diaphragm which is deformed through the effect of the pressure exerted by a liquid within the environment monitored by the pressure switch.

The coil is a part of an oscillating electric circuit that outputs an electric signal having a frequency that varies as a function of the different positions taken by the core within the coil itself, i.e. depending on the deformation of the diaphragm caused by liquid pressure; of course, the electric signal may be either a voltage signal or a current signal.

Linear pressure switches like the one described above are commercially available in Italy from companies ITW Metalflex, Invensys and Bitron.

The transcharacteristic, i.e. the pressure switch transfer function that relates frequency to pressure, varies linearly in this case; hence it is called a "linear" pressure switch: in fact, the transfer function that relates the output quantity (frequency) to the input quantity (pressure) can be represented as a straight line of the *y* = α*x* + β type in the pressure-frequency Cartesian plane, wherein the abscissa value is the pressure of the liquid acting upon the diaphragm (which is proportional to the liquid level), and the ordinate value is the pressure switch frequency.

Normally such pressure switches have (like any measuring device) certain production tolerances which may cause two seemingly equal pressure switches (i.e. so manufactured as to be nominally equal), when subjected to the same pressure, to output signals having different frequencies; hence, the transfer functions, or transcharacteristics, of two pressure switches (though manufactured in the same way) will be different, too: the two straight lines r: *y*=α*x*+β and r': *y*'=α'*x*+β' representing the transfer function in the pressure-frequency Cartesian plane will be different from each other, since the coefficients α, α' and β, β' may vary.

In the first place, such discrepancies are attributable to very small differences between nominally equal pressure switches, consisting, for example, of different responses of the elastic diaphragms (e.g. due to a slightly different composition or thickness of the material used) or slight differences in the components of the electric circuit (e.g. in the coil).

This problem is amplified by the fact that the pressure differences to be measured in a household appliance in order to ascertain a liquid level variation are extremely small, thus requiring a certain degree of accuracy.

Household appliances typically include a control unit so programmed as to associate a certain value of the pressure switch output frequency with a certain level of the liquid contained in the environment monitored by the pressure switch, thus recognizing the various operating states of the household appliance and controlling the transitions among them accordingly (such as switching between two different steps of a wash cycle or between a wash step and a drying step or the like).

It follows that, of course, the machine operation will not strictly reflect the actual liquid levels present in the environment monitored by the pressure switch, thus causing a not very precise operation.

Furthermore, household appliances nowadays include additional functions (e.g. steam cycles in washing machines, cleaning cycles or safety functions), which can only be activated when the liquid in the machine is at certain levels, thus making the operation of the appliance increasingly bound to the accurate measurement of the quantity of liquid contained therein: for example, let us consider the case of steam production in a tub of a washing machine by heating a submerged electric resistor, where it is necessary that the level of the liquid contained in the tub is detected accurately in order to prevent the electric resistor from emerging and getting damaged; in such a case, it is apparent that the liquid level measurement must be as accurate as possible.

It can therefore be easily understood that, in this respect, for the household appliance to operate properly, the measurement difference which may ensue when two distinct pressure switches are installed in the appliance (although manufactured in exactly the same manner) may lead to differences in the readings obtained, which may in turn cause unacceptable errors.

It is a first object of the present invention to provide a method for manufacturing household appliances wherein the measurement deviation caused by measurement differences among nominally equal pressure switches is eliminated or anyway considerably reduced.

It is a second object of the present invention to provide a household appliance which does not show such measurement deviations or which only shows negligible measurement deviations that do not impair its correct operation.

It is yet another object of the present invention to provide a linear pressure switch which is particularly suitable for installation in a household appliance, since it eliminates or minimizes any measurement deviations.

Said objects are achieved by the present invention through a method for the production of a household appliance, in particular a washing machine, a dishwasher, a washing/drying machine or a clothes dryer for domestic use, a household appliance and a pressure switch incorporating the features set out in the appended claims, which are intended as an integral part of the present description.

The present invention is based on the idea of measuring beforehand the identification parameters of the transfer function of every pressure switch and calibrating the control unit of the household appliance accordingly; the calibration of the control unit may take place, for example, by setting said parameters during the appliance assembly stage, as soon as it is clear that a specific control unit will be coupled to a specific pressure switch, e.g. after both the control unit and the pressure switch have been installed in the frame of the household appliance.

Further objects, features and advantages of the present invention will become apparent from the following detailed description and from the annexed drawing, which is supplied by way of non-limiting explanatory example, wherein:
Fig. 1 illustrates a transfer function of a linear pressure switch in the pressure-frequency Cartesian plane;
Fig. 2 is a diagrammatic view of a linear pressure switch according to the present invention;
Fig. 3 shows a household appliance, in particular a washing machine, incorporating the linear pressure switch of Fig. 2.

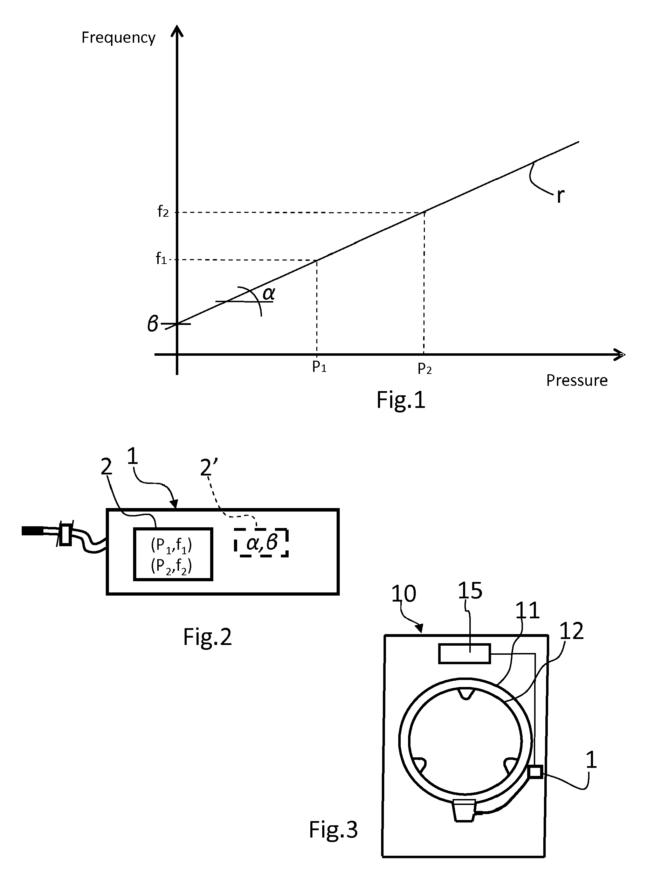

Fig. 1 illustrates the transfer function r: *y*=α*x*+β of a linear pressure switch (also called transcharacteristic or, more simply, characteristic); as can be seen, in the pressure-frequency Cartesian plane said characteristic is a straight line where each pressure value P₁ on the axis of abscissas univocally corresponds to one frequency value f₁ on the axis of ordinates.

Knowing the coordinates of two points, e.g. (P₁,f₁) and (P₂,f₂), it is possible to univocally identify the straight line r which such points belong to, i.e. the transfer function of the specific pressure switch for which such points have been measured.

It is therefore possible to establish a biunique correspondence between each pressure value and the corresponding frequency value over the entire operating range of the instrument simply by considering that such values are the points belonging to the straight line r.

As an alternative, said biunique correspondence may be determined by knowing α and β, i.e. the angular coefficient and the intercept with the axis of ordinates of the straight line r.

To know two points (P₁,f₁) and (P₂,f₂), or α and β, means to known the identification parameters of the straight line r, which is the transfer function or transcharacteristic of the pressure switch.

According to the method of the present invention, the identification parameters of the transfer function of every single pressure switch are measured beforehand, e.g. before installing it in the household appliance; said parameters are then associated with that single pressure switch, in particular by indicating them on the pressure switch itself; next, the latter is installed in the household appliance; finally, the control unit of the latter is calibrated as a function of the measured identification parameters of the transfer function of that pressure switch, so that the operation of the control unit is customized in accordance with the pressure switch associated therewith.

The parameters associated with the pressure switch are such that they can be acquired by an external reader device capable of acquiring the characteristic information of the transfer function and transmitting it to the control unit via communication means.

For this purpose, it is conceivable that, after the identification parameters of the transfer function of each pressure switch have been measured and said parameters have been associated with that pressure switch, as well as during the appliance production stage, said parameters are read from the pressure switch and stored into the control unit.

It follows that a customized calibration of the control unit is carried out for each appliance, so that the control unit will use those very identification parameters of that single linear pressure switch installed (or to be installed) in the appliance, thus reducing any measurement deviations and ensuring that the appliance will operate properly.

In this manner, the control unit (which generally includes a microcontroller) can build a table of matches between the frequency values received from the pressure switch and the corresponding pressure values actually detected by the pressure switch, thus being able to determine the quantity of liquid contained in the environment monitored by the pressure switch and to operate in strict accordance with the transmitted frequency or pressure values.

To this end, as shown in Fig. 2, the method requires that the transfer function identification parameters of each pressure switch are measured before installation, which parameters are then univocally associated with the pressure switch 1, e.g. by placing an indication about said measured identification parameters onto the pressure switch; this step may take place before installing the pressure switch in the household appliance; for example, this measurement may be carried out by the pressure switch manufacturer, who will supply pressure switches for which the transfer function identification parameters will have already been measured and stated on the pressure switch itself.

For example, in Fig. 2 the identification parameters comprise the coordinates of the point pair (P₁,f₁) and (P₂,f₂) and are indicated on the specification plate 2 associated with the linear pressure switch 1.

Alternatively, as shown by means of a dashed line in Fig. 2, the identification parameters may consist of the values of the angular coefficient α and the intercept with the axis of ordinates β (of the straight line r representing the transfer function in the pressure-frequency Cartesian plane), which will also be printed on a specification plate 2' applied to or anyway associated with the pressure switch.

As an alternative to the simple specification plates shown in Fig. 2, it is conceivable to use specification plates with holograms, which offer the advantage of being more difficult to counterfeit.

It must be pointed out that the identification parameters may also be stamped directly on the casing of the pressure switch 1, or be associated therewith by means of bar codes or electronic labels, such as RFID (Radio Frequency Identification) labels, per se known, or a video camera associated with an optical character recognition (known as OCR) system.

As the household appliance is being manufactured, once the values have been received from a reader device, said identification parameters are used in order to program the control unit accordingly, which is thus calibrated exactly in accordance with the characteristic of the pressure switch installed in that appliance.

In substance, once the identification parameters of the transfer function of the pressure switch installed in the machine have been set, the control unit can attribute to each frequency value received from the pressure switch the corresponding pressure value detected by the pressure switch, and can thus control the operation of the household appliance accordingly with only minimal (or even null) deviations.

The identification parameters (whatever they are) may be set into the control unit in several ways.

For instance, if the identification parameters are stamped on the pressure switch 1 or on suitable specification plates directly readable by an operator, the latter may directly read such values and set them into a control unit programming terminal.

Alternatively, if the identification parameters are provided in the form of a bar code or an electronic label not directly readable by the operator, then it is conceivable that during the appliance production stage this data is read by suitable readers (e.g. a bar code scanner or an RFID reader), which will read the information contents thereof (i.e. the identification parameters) and set such information into the control unit of the household appliance.

In this regard, it is conceivable that this reading step is carried out either manually by the person in charge of the installation of the pressure switch in the appliance, who for that purpose will be equipped with a portable scanner connected to a control unit programming terminal, or automatically by means of suitable scanners arranged in the assembly line, which will set the identification parameters through a control unit programming terminal.

Said parameters may of course be set into the control unit in several ways: for instance, said parameters may be transmitted over a communication line associated with a serial device, e.g. an asynchronous serial line (e.g. UART or RS232) or a synchronous serial line (e.g. I2C bus), or else it is conceivable that the coordinates of the points (P₁,f₁) and (P₂,f₂) or the values of the angular coefficient α and of the intercept with the axis of ordinates β are set directly into the control unit: in this case, the creation of a match table associating each frequency value with a corresponding pressure value by using the straight line defined by said parameters will occur in the control unit itself.

Alternatively, the identification parameters may be read from the pressure switch and then processed (e.g. by the control unit programming terminal), so as to supply to the control unit directly the frequency-pressure correspondence table.

In any case, for the purposes of the present invention it is important to comprehend that the identification parameters are used for setting the control unit in order to customize it in accordance with the installed pressure switch, regardless of whether said parameters are processed before or after being set into the control unit.

Advantageously, in order to avoid errors during the appliance production stage, it is advantageously provided that both the control unit and the pressure switch are first installed in every appliance and then the identification parameters of the pressure switch transfer function are read and set into the control unit, thus avoiding that a different pressure switch may be installed by mistake in the place of the one for which said parameters have been read and set.

Fig. 3 shows an example of a household appliance comprising the linear pressure switch 1 manufactured in accordance with the above-described method.

In this case, the household appliance is a washing machine 10, but it may likewise be a washing/drying machine, a dishwasher or a clothes dryer.

The washing machine 10 is illustrated in a very diagrammatic form in Fig. 3, without all those parts which, though generally included, are not useful for understanding the present invention, such as the motor and the liquid supply and drain hoses.

The washing machine 10 generally comprises a tub 11 housing a rotary drum 12 adapted to contain a certain quantity of laundry.

The washing machine 10 comprises the linear pressure switch 1 in association with the tub 11, so that it can detect the pressure of the wash liquid contained in the tub 11 and, as a result, the level of said wash liquid.

Fig. 3 also shows the control unit 15 connected to the linear pressure switch 1 in order to detect the frequency of the signal emitted by the latter as a consequence of the pressure detected against the diaphragm, exerted by the liquid contained in the tub 11.

The control unit 15 typically comprises a programmable electronic board adapted to store a plurality of wash programs, which typically include one or more wash cycles, and to control the execution thereof.

In accordance with the above description, the control unit 15 of the washing machine 10 is calibrated as a function of the identification parameters of the transfer function of the linear pressure switch 1, as described, thus attaining the above-mentioned advantages.

As a variation, there may be a case wherein the pressure switch does not output a signal whose frequency is a linear function of pressure, the latter being measured through a change in the intensity or amplitude of the electric signal.

Of course, in such a case the transfer function will no longer be the above-described pressure-frequency linear one, but, for example, a pressure-intensity or pressure-amplitude transfer function: in all of these cases, of course, the transfer function identification parameters to be set into the control unit will be those which identify the respective transfer function.

In principle, although the simplest case of a linear pressure switch has been described so far, it is also conceivable to apply the method of the present invention, as well as the household appliance manufactured in accordance with said method and the pressure switch used for implementing said method, to the case wherein the transfer function of the pressure switch is not linear.

Generally speaking, the transfer function may be a curve of any kind.

In such a case, the transfer function identification parameters measured on the pressure switch will be those which allow the transfer function to be identified univocally; at most, in the case of a curve of any kind, these may be all points of the curve or even just a certain number of predetermined points, which may then be used to build the curve by means of an interpolation process of any kind.

## Claims

1. Method for the production of a household appliance (10), in particular a washing machine, a dishwasher, a washing/drying machine or a clothes dryer, of the type comprising at least one pressure switch (1) operationally connected to a control unit (15) of the household appliance (10),
**characterized by** comprising at least the steps of:
a) reading measured identification parameters of the transfer function of the pressure switch (1),
b) calibrating the control unit (15) as a function of said identification parameters,
so that the operation of the control unit (15) is customized in accordance with the pressure switch (1) associated therewith in the same household appliance (10).

2. Method according to the preceding claim, wherein the steps a) and b) are carried out after the pressure switch (1) and the control unit (15) have been installed in the household appliance (10).

3. Method according to claim 1 or 2, wherein the pressure switch (1) is of the type adapted to detect a pressure value and to correspondingly emit an electric signal whose frequency changes as a function of the measured pressure value, which pressure switch (1) has a linear pressure-frequency transfer function that can be represented as a straight line (r) in a pressure-frequency Cartesian plane.

4. Method according to claim 3, wherein the identification parameters of the pressure switch transfer function are at least the coordinates of two points ((P₁,f₁), (P₂,f₂)) of the transfer function (r) in a pressure-frequency Cartesian plane.

5. Method according to claim 3, wherein the identification parameters of the pressure switch transfer function are at least the value of the angular coefficient (α) and the intercept (β) with the axis of ordinates of the straight line (r) representing the transfer function of the pressure switch (1) in a pressure-frequency Cartesian plane.

6. Method according to any of the preceding claims, wherein the reading of the measured identification parameters takes place by reading an indication concerning the measured identification parameters associated with each pressure switch.

7. Method according to claim 6, wherein said indication is a specification plate (2,2') associated with the linear pressure switch (1), whereon said identification parameters of the pressure switch transfer function are stated.

8. Household appliance (10), in particular a washing machine, a dishwasher, a washing/drying machine or a clothes dryer, of the type comprising at least one pressure switch (1) operationally connected to a control unit (15) of the household appliance (10),
**characterized in that**
the control unit (15) is calibrated as a function of measured identification parameters of the transfer function of the pressure switch (1), so that the operation of the control unit (15) is customized in accordance with the pressure switch (1) associated therewith in the same household appliance (10).

9. Household appliance according to claim 8, wherein the pressure switch (1) is of the type adapted to detect a pressure value and to correspondingly emit an electric signal whose frequency changes as a function of the measured pressure value, which pressure switch (1) has a linear pressure-frequency transfer function that can be represented as a straight line (r) in a pressure-frequency Cartesian plane, and wherein the identification parameters of the pressure switch transfer function are the coordinates of two points ((P₁,f₁), (P₂,f₂)) of the transfer function (r) in a pressure-frequency Cartesian plane.

10. Household appliance according to claim 8, wherein the pressure switch (1) is of the type adapted to detect a pressure value and to correspondingly emit an electric signal whose frequency changes as a function of the measured pressure value, which pressure switch (1) has a linear pressure-frequency transfer function that can be represented as a straight line (r) in a pressure-frequency Cartesian plane, and wherein the identification parameters of the pressure switch transfer function are at least the value of the angular coefficient (α) and the intercept (β) with the axis of ordinates of the straight line (r) representing the transfer function of the pressure switch (1) in a pressure-frequency Cartesian plane.

11. Household appliance according to any of claims 8 to 10, wherein the pressure switch (1) comprises an indication concerning the measured identification parameters of the transfer function of the pressure switch (1).

12. Pressure switch (1) of the type adapted to detect a pressure value and to correspondingly emit an electric signal whose frequency changes as a function of the pressure value measured according to a transfer function,
**characterized in that**
the pressure switch (1) comprises an indication concerning identification parameters of its transfer function.

13. Pressure switch (1) according to claim 12, wherein the pressure switch (1) has a linear pressure-frequency transfer function that can be represented as a straight line (r) in a pressure-frequency Cartesian plane, and wherein the identification parameters of the pressure switch transfer function are the coordinates of two points ((P₁,f₁), (P₂,f₂)) of the transfer function (r) in a pressure-frequency Cartesian plane.

14. Pressure switch (1) according to claim 12, wherein the pressure switch (1) has a linear pressure-frequency transfer function that can be represented as a straight line (r) in a pressure-frequency Cartesian plane, and wherein the identification parameters of the pressure switch transfer function are at least the value of the angular coefficient (α) and the intercept (β) with the axis of ordinates of the straight line (r) representing the transfer function of the pressure switch (1) in a pressure-frequency Cartesian plane.

15. Pressure switch (1) according to any of claims 12 to 14, wherein said indication is a specification plate (2,2') associated with the linear pressure switch (1), whereon said identification parameters of the pressure switch transfer function are stated.
